(19) Europäisches Patentamt / European Patent Office / Office européen des brevets

(11) **EP 2 738 948 A1**

(12) **EUROPEAN PATENT APPLICATION**

(43) Date of publication:
**04.06.2014 Bulletin 2014/23**

(51) Int Cl.:
*H04B 1/7143* (2011.01)

(21) Application number: **12306475.0**

(22) Date of filing: **28.11.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Sercel**
**44470 Carquefou (FR)**

(72) Inventors:
• **Guichard, Florent**
  **44000 NANTES (FR)**

• **Le Moine, Fabien**
  **35470 BAIN DE BRETAGNE (FR)**
• **Lostanlen-Nouy, Sophie**
  **44000 NANTES (FR)**

(74) Representative: **Guéné, Patrick**
**Cabinet Vidon**
**Technopôle Atalante**
**16B, rue de Jouanet**
**35703 Rennes Cedex 7 (FR)**

(54) **Method for setting frequency channels in a multi-hop wireless mesh network.**

(57)    A method for setting frequency channels in a multi-hop wireless mesh network comprising a plurality of nodes. Each node hops on frequency channels, with a hop period, according to a frequency channels hopping sequence. All data packets transmitted by the nodes have a duration strictly longer than the hop period. When a given node of the plurality of nodes is in a first transmit mode in order to transmit a data packet, it carries out steps of: selecting a transmit frequency channel as a function of the frequency channels hopping sequence; and transmitting the data packet using, for the entire duration of the data packet, the selected transmit frequency channel.

Fig. 3

**Description**

**1. FIELD OF THE INVENTION**

The field of the invention is that of medium-access control (MAC) in a multi-hop wireless mesh network (also referred to as ad hoc wireless mesh network) comprising a plurality of nodes.

More specifically, the invention pertains to a technique for setting (also referred to as assigning or allocating) frequency channels in such a network.

The present invention can be applied, notably but not exclusively, in the case where each of the nodes comprises or is connected to at least one sensor (e.g. a seismic sensor).

**2. TECHNOLOGICAL BACKGROUND**

A first known solution, for setting frequency channels in a multi-hop wireless mesh network, is described in US Patent 7,773,457 (Crice et al.), which describes a method for acquiring seismic data using a wireless network comprising a number of individual data acquisition modules (that are configured to collect seismic data and forward these data to a central recording and control system). It is proposed to assign different frequencies to the acquisition modules, so that they don't interfere with one another. In other words, it is proposed a Frequency Division Multiple Access (FDMA), i.e. a channel access method allocating to each acquisition module one or several channels (also referred to as frequency bands). Then different acquisition modules can transmit concurrently, thereby increasing the seismic data read out rate.

A major drawback of this first known solution is that the frequencies have to be assigned to the acquisition modules by a third party (centralized allocation). The acquisition modules cannot autonomously and independently set their frequency.

A second known solution, for setting frequency channels in a multi-hop wireless mesh network, is described in the following article: "A New Multi-Channel MAC protocol with O n-Demand Channel Assignment for Multi-Hop Mobile Ad Hoc Networks" by Shih-Lin Wu, Chih-Yu Lin, Yu-Chee Tseng and Jang-Ping Sheu. The authors divide the bandwidth in one control channel and several data channels. The purpose of the control channel is to resolve contention/collision on data channels (medium access issue) and to decide which data channels to be used by which hosts (data channel assignment issue). It is proposed a new multi-channel MAC protocol which can be applied to both FDMA and CDMA technologies. The main idea of this protocol is as follows. For a mobile host A to communicate with a mobile host B, A will send on the control channel a RTS (Request-To-Send) to B carrying its FCL (Free Channel List). Then B will match this FCL with its CUL (Channel Usage List) to identify a data channel (if any) to be used in their subsequent communication and reply a CTS (Clear-To-Send) to A on the control channel. On receiving B's CTS, A will send a RES (reservation) packet on the control channel, to inhibit its neighbourhood from using the same data channel. Similarly, the CTS will inhibit B's neighbourhood from using that data channel. Finally, a data packet will be transmitted from A to B on that data channel.

This second known solution obviates the aforesaid major drawback of the first known solution since there is no need for an assignment of the data channel by a third party (no centralized allocation).

However, this second known solution requires the use of wideband signals instead of narrowband signals (because of radio regulations, as detailed below), which leads to a worse sensitivity, thus to a lower radio link budget for each mobile host, and therefore to a lower battery life (since a higher transmit power is needed).

Indeed, in order to increase the battery life comprised in a node of the multi-hop wireless mesh network, one has to lower the transmit power of this node. To keep the range of the system (i.e. to keep the radio link budget), one has therefore to improve the sensitivity of the system (the radio link budget, noted RLB is given by: RLB=G+P-S, with G the antenna gain, P the transmit power and S the sensitivity). The sensitivity can be improved by using narrowband signals (because the sensitivity depends from the noise power, which itself depends from the signal bandwidth). But because of radio regulations (FCC, CE-ETSI ...), FHSS ("Frequency-hopping spread spectrum") shall be used when using narrow bandwidth signals (bandwidth lower than 500 kHz), e.g. in the unlicensed 2.4 GHz ISM band ("Industrial, Scientific and Medical band"). From these radio regulations, FHSS might be not mandatory but in that case the allowed transmit power would be too much low to keep the range. So one has to use FHSS to get a sufficient power level.

But as the second solution needs one control channel and several data channels, and a mechanism of RTS/CTS on the control channel, this second known solution cannot use narrowband signals because FHSS requires an equal use of the frequencies. Thus, this second known solution cannot use narrowband signals to improve the sensitivity, and thus the battery life (since a higher transmit power is needed in that case).

**3. GOALS OF THE INVENTION**

The invention, in at least one embodiment, is aimed especially at overcoming these different drawbacks of the prior art.

More specifically, it is a goal of at least one embodiment of the invention to provide a technique for setting frequency channels in a multi-hop wireless mesh network, this technique allowing:

● to ease the installation of the network thanks to an autonomous and independent frequency setting, without any intervention of a third party (each node can autonomously and independently set its frequency); and
● to use narrowband signals while being compliant with radio regulations, which leads to a better sensitivity, thus to a higher radio link budget and therefore to a higher battery life (since a lower transmit power is needed).

It is also an aim of at least one embodiment of the invention to provide a technique of this kind, allowing to minimize the effect of frequency fading and then strengthen the radio link in obstructed environments.

It is an additional goal of at least one embodiment of the invention to provide a technique of this kind that is simple to implement and costs little.

## 4. SUMMARY OF THE INVENTION

A particular embodiment of the invention proposes a method for setting frequency channels in a multi-hop wireless mesh network comprising a plurality of nodes. Each of said nodes hops on frequency channels, with a hop period, according to a frequency channels hopping sequence. All data packets transmitted by said nodes have a duration strictly longer than said hop period. When a given node of said plurality of nodes is in a first transmit mode in order to transmit a data packet, it carries out steps of:

- selecting a transmit frequency channel as a function of said frequency channels hopping sequence;
- transmitting said data packet using, for the entire duration of said data packet, the selected transmit frequency channel.

The general principle is that of using a frequency channels hopping sequence (i.e. a FHSS technique) to allow any node to select a transmit frequency channel. Since packets have a duration strictly longer than the hop period and thanks to the random behaviour of the transmission event, several transmissions can occur at the same time on different frequency channels. Thus there is no need for a frequency channel assignment by a third party (no centralized allocation). Each node can autonomously and independently set its frequency channel with an increased probability to get simultaneous links on different frequency channels.

This invention uses the FHSS technique in an uncommon way, which leads to an intrinsic implementation of FDMA with an independent and autonomous frequency channel setting by each transmitter node. Thanks to FDMA the throughput of the network is not degraded by collisions and thanks to FHSS the proposed solution is compliant with the radio regulation and allows the use narrowband signals which leads to a better sensitivity, thus to a higher radio link budget and therefore to a higher battery life (since a lower transmit power is needed).

Furthermore, FHSS minimizes the effect of frequency fading and then strengthen the radio link in obstructed environments. Then this allows to implement a multi-hop wireless mesh networks in obstructed environments without any frequency channel planning, in order to ease the installation of these network topologies, especially in the case of wireless seismic networks. Furthermore it leads to an increasing of the battery life of the nodes, through the use of narrow band signals.

According to a particular feature, when a given node of said plurality of nodes is in a receive mode it carries out steps of:

- detecting a data packet on a given receive frequency channel of said frequency channels hopping sequence;
- staying on the given receive frequency channel till the end of said detected data packet, if said given node is the destination of said detected data packet;
- hoping on the next frequency channel of said frequency channels hopping sequence, at the end of a current hop period, if said given node is not the destination of said detected data packet.

Thus the aforesaid frequency channels hopping sequence is also used to allow any node to select a receive frequency channel.

According to a particular feature, when a given node of said plurality of nodes is in a second transmit mode in order to transmit an acknowledgement packet of a data packet previously received by said given node on a given receive frequency channel, it carries out a step of: transmitting said acknowledgement packet using as transmit frequency channel said given receive frequency channel.

Having the acknowledgement packet (ACK packet) transmitted on the same frequency as the reception frequency allows:

* to save time for the node receiving the ACK packet. Indeed, in this case, it is not necessary to perform a switching of receive frequency (no receive frequency reconfiguration required);
* to minimize the risk of choosing a frequency that has fading. Indeed, if all went well during the transmission of the data packet from a first node to a second node (e.g. transmission on frequency F1, with no fading), there is every chance that the transmission of the ACK packet from the second node to the first node is also good on the frequency F1 (since no fading previously on F1). Retransmit the ACK packet on a frequency different from F1 is possible but there is no guarantee that this frequency (F2 for example) has no fading.

According to a particular feature, when a given node is in the first transmit mode, it carries out a supplemental step of: inserting a random delay before carrying out the transmitting step.

This allows to further increase the probability to get simultaneous links on different frequency channels.

According to a particular feature, said supplemental step of inserting a random delay is carried out before a second attempt to execute the transmitting step, if a first attempt to execute the transmitting step is not successful due to a transmission failure or a collision detection.

According to a particular feature, said random delay is defined by: $T_{rand} = Random() \times T_{hop}$, where:

- $T_{rand}$ is the random delay,
- $T_{hop}$ is the hop period, and
- Random() is a pseudo-random integer.

Thus the random delay is computed easily.

According to a particular feature, said pseudo-random integer Random() is drawn from an uniform distribution over an interval [O, CW], with CW a contention window having an integer value.

According to a particular feature, the contention window CW is incremented following a binary exponential way, when the transmitting step can not be executed normally.

According to a particular feature, when a given node is in the first transmit mode, said selecting step comprises:

- obtaining a current value of a clock CLK when the selecting step starts, said clock CLK incrementing by one every hop period;
- computing a reference frequency F(CLK) of the transmit frequency channel as follows: $F(CLK) = F0 + \Delta F \times Sequence(CLK \text{ modulo } L)$, where:

   * F0 is a base frequency,
   * $\Delta F$ is a channel spacing,
   * L is the number of frequency channels in the frequency channels hopping sequence,
   * Sequence(x) is a function giving an integer having rank x in a sequence of integers defining said frequency channels hopping sequence.

Thus the selecting step is simple to implement.

According to a particular feature, L is a prime number.

Thus all the frequency channels are used equally.

According to a particular feature, in transmitting step, the data packet is transmitted with a signal having a bandwidth lower than 500 kHz.

As already mentioned above, the use narrowband signals leads to a better sensitivity, thus to a higher radio link budget and therefore to a higher battery life (since a lower transmit power is needed).

In a particular application, each of said nodes comprises or is connected to at least one seismic sensor belonging to the group comprising:

- analog or digital seismic sensors having a single vertical component; and
- analog or digital seismic sensors having three orthogonal components.

According to a particular feature, said nodes transmit data packets comprising quality control data.

In another embodiment, the invention pertains to a computer program product comprising program code instructions for implementing the above-mentioned method (in any of its different embodiments) when said program is executed on a computer or a processor.

In another embodiment, the invention pertains to a non-transitory computer-readable carrier medium, storing a program which, when executed by a computer or a processor causes the computer or the processor to carry out the above-mentioned method (in any of its different embodiments).

Another particular embodiment of the invention proposes a node belonging to a plurality of nodes comprised in a multi-hop wireless mesh network. Said node comprises:

- means for hoping on frequency channels, with a hop period, according to a frequency channels hopping sequence,
- means for transmitting data packets having a duration strictly longer than said hop period,

and the following means, activated when said node is in a first transmit mode in order to transmit a data packet:

- means for selecting a transmit frequency channel as a function of said frequency channels hopping sequence;
- means for transmitting said data packet using, for the entire duration of said data packet, the selected transmit frequency channel.

According to a particular feature, said node comprises the following means, activated when said node is in a receive mode:

- means for detecting a data packet on a given receive frequency channel of said frequency channels hopping sequence;
- means for staying on the given receive frequency channel till the end of said detected data packet, if said node is the destination of said detected data packet;
- means for hoping on the next frequency channel of said frequency channels hopping sequence, at the end of a current hop period, if said node is not the destination of said detected data packet.

## 5. LIST OF FIGURES

Other features and advantages of embodiments of the invention shall appear from the following description, given by way of an indicative and non-exhaustive examples and from the appended drawings, of which:

- Figure 1 provides a schematic illustration of a same frequency channels hopping sequence shared by two nodes;
- Figure 2 provides a schematic illustration of the transmission of data packets by a node, when a particular embodiment of the method according to the invention is implemented;
- Figure 3 is a schematic illustration of the transmission of data packets and corresponding acknowledgement packets, between two nodes, when a particular embodiment of the method according to the invention is implemented;
- Figure 4A is a schematic illustration of two simultaneous links;
- Figure 4B is a schematic illustration of the transmission of data packets on the two links of figure 4A, when a particular embodiment of the method according to the invention is implemented;
- Figure 5 provides a schematic illustration of a node according to a particular embodiment of the invention;
- Figure 6 is a flowchart detailing the steps carried out by a node in the transmit mode, when a particular embodiment of the method according to the invention is implemented;
- Figure 7 is a flowchart detailing the steps carried out by a node in the receive mode, when a particular embodiment of the method according to the invention is implemented.

## 6. DETAILED DESCRIPTION

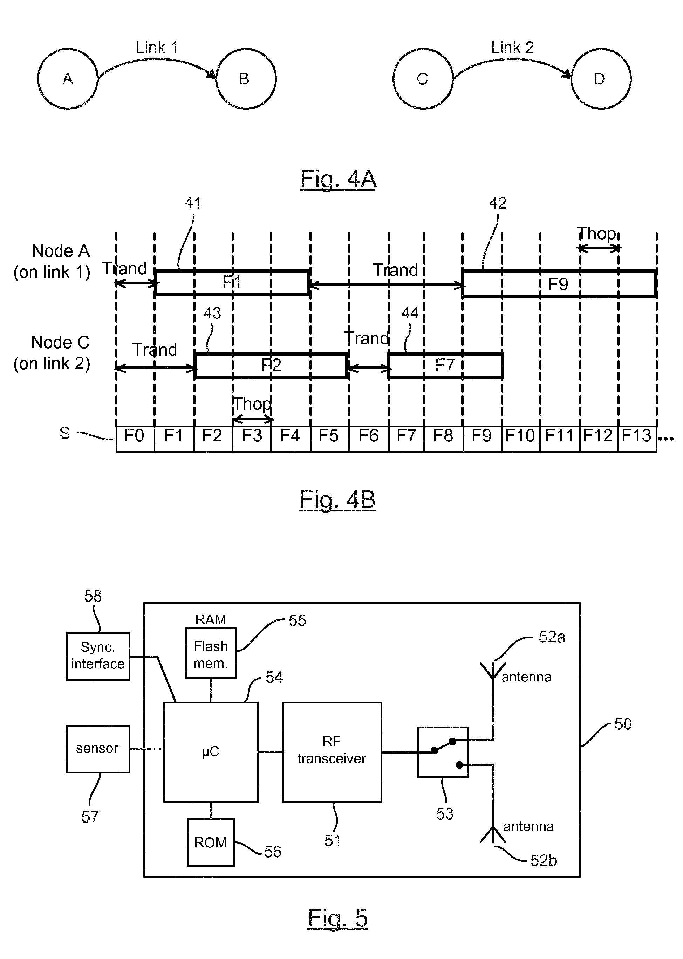

We first present the general principle of the invention, which relates to a method for setting frequency channels in a multi-hop wireless mesh network comprising a plurality of nodes. For example (see figure 5 described below), this network is a network of nodes (also referred to as "seismic sensor units") each comprising or being connected to at least one seismic sensor, and each of these nodes transmits data packets comprising quality control data.

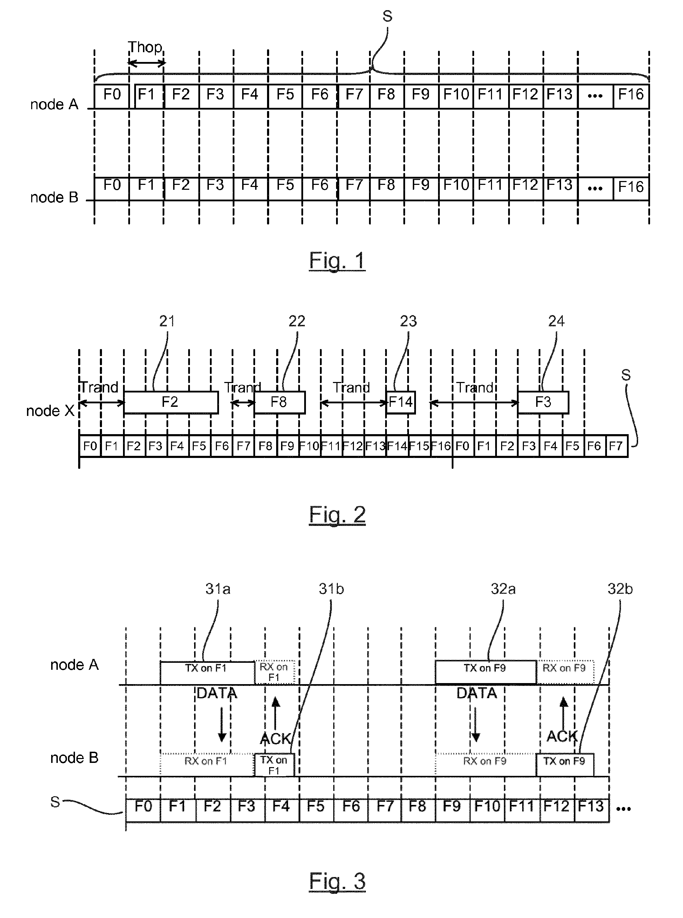

As illustrated in **figure 1**, all the nodes ("node A", "node B", etc.) know and share a same frequency channels hopping sequence S. In the example of figure 1, this sequence S comprises 17 frequency channels F0 to F16, with a hop period $T_{hop}$. Each node hops on frequency channels F0 to F16, with the hop period $T_{hop}$, according to the frequency channels hopping sequence S. In other words, a FHSS is implemented and each node changes its receive frequency channel according to the frequency channels hopping sequence S.

As illustrated in **figure 2**, when a node (e.g. "node X") transmits a data packet, the transmit frequency channel is given by (i.e. selected by the node according to) the frequency channels hopping sequence S. The selected transmit frequency channel is fixed along the entire duration of the data packet. For example, the data packet referenced 21 (respectively 22, 23 and 24) is transmitted with the transmit frequency channel F2 (respectively F8, F14 and F3), which is the current frequency channel given by the frequency channels hopping sequence S when begins the transmitting step for this data packet 21 (respectively 22, 23 and 24).

All the data packets 21-24 transmitted by the nodes have a duration which may vary from one data packet to the other, but which is always strictly longer than the hop period $T_{hop}$. In other words, FHSS is implemented with time slots strictly shorter than the duration of transmitted data packets. This feature (time slots strictly shorter than the minimal data packet duration) allows to increase the probability to get simultaneous links on different frequency channels.

In the embodiment of figure 2, a random delay $T_{rand}$ is inserted before each data packet transmission, in order to further increase the probability to get simultaneous links on different frequency channels. For example, $T_{rand}$ is equal to 2* $T_{hop}$ before the data packet 21,1* $T_{hop}$ before the data packet 22, 3* $T_{hop}$ before the data packet 23 and 4* $T_{hop}$ before the data packet 24.

**Figure 3** is a schematic illustration of the transmission of data packets (DATA) 31a and 32a and corresponding acknowledgement packets (ACK) 31b and 32b, between two nodes ("node A" and "node B"), when a particular embodiment of the method according to the invention is implemented.

In this example, when it is in the transmit mode TX, the node A transmits the data packet 31a using the transmit frequency channel F1, which is given by the frequency channels hopping sequence S. The selected transmit frequency channel F1 is fixed along the entire duration of the data packet 31a. The node B, which is in the receive mode RX, detects the data packet 31a when it is on the frequency channel F1, and then stays on this frequency channel till the end of the data packet 31a. After the data packet 31a has been entirely received, the node B goes into the transmit mode TX in order to transmit the corresponding acknowledgement packet 31b using the same transmit frequency channel F1 (all along the entire duration of the acknowledgement packet 31b). The node A, which is in the receive mode RX, receives the acknowledgement packet 31b, on the frequency channel F1.

Same reasoning applies to the transmission, on the frequency channel F9, of both the data packet 32a (from node A to node B) and the corresponding acknowledgement packet 32b (from node B to node A).

As illustrated in **figure 4B,** thanks to the random behavior of the transmission event, several transmissions can occur at the same time on different frequency channels. More precisely, figure 4B is a schematic illustration of the simultaneous transmission of data packets 41-44 on the two links of **figure 4A** ("link 1" between nodes A and B, and "link 2" between nodes C and D), when a particular embodiment of the method according to the invention is implemented.

The node A transmits the data packets 41 and 42 using the transmit frequency channels F1 and F9 respectively, which are each given by the frequency channels hopping sequence S. Each of the selected transmit frequency channels F1 and F9 is fixed along the entire duration of the data packet 41 or 42.

The node C transmits the data packets 43 and 44 using the transmit frequency channels F2 and F7 respectively, which are each given by the frequency channels hopping sequence S. Each of the selected transmit frequency channels F2 and F7 is fixed along the entire duration of the data packet 43 or 44.

**Figure 5** provides a schematic illustration of a node 50 according to a particular embodiment of the invention.

In this example, the node 50 is a "seismic sensor unit" comprising:

● a 2.4GHz RF transceiver 51;
● two internal antennas 52a, 52b, connected to the RF transceiver via a switch 53;
● a microcontroller (or a processor) 54, connected to the RF transceiver 51;
● a random access memory (RAM) 55, e.g. a Flash memory, connected to the microcontroller 54; and
● a read-only memory (ROM) 56, connected to the microcontroller 54.

The node 50 is connected to (or, in an alternative embodiment, integrates) a synchronization interface 58 towards a synchronization source (e.g. GPS, radio or IEEE1588) generating a reference clock. As disclosed below, the microcontroller 54 uses an internal clock (CLK) which is synchronized with the reference clock, using an external signal received by the synchronization interface 58.

The node 50 is connected (e.g. via a string) to at least one seismic sensor 57. In an alternative embodiment, the at least one seismic sensor 57 is integrated in the node 50.

For example, each seismic sensor 57 is:

● an analog seismic sensor having a single vertical component;
● a digital seismic sensor having a single vertical component;
●an analog seismic sensor having three orthogonal components (e.g. "Tripod", three geophones arranged along three orthonormal axis); or
● a digital seismic sensor having three orthogonal components (e.g. three accelerometers (MEMS) arranged along three orthonormal axis).

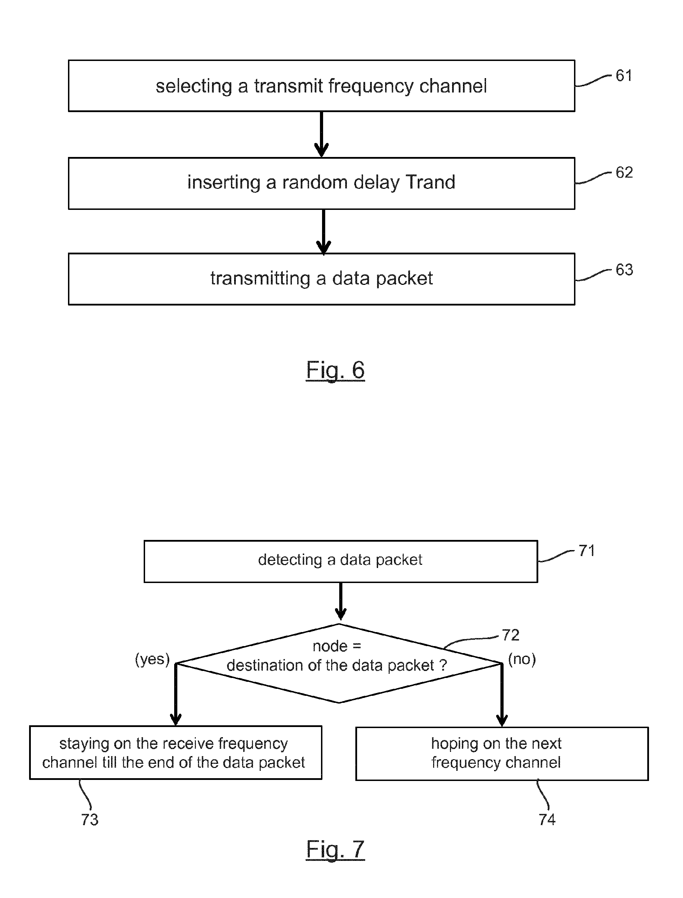

The read-only memory 56 is a non-transitory computer-readable carrier medium. It stores executable program code instructions, which are executed by the microcontroller 54 in order to enable implementation of the present method (method for setting frequency channels in a multi-hop wireless mesh network), as described above (in relation to figures 1, 2, 3, 4A and 4B) and below (in relation to figures 6 and 7).

Upon initialization, the aforementioned program code instructions are transferred from the read-only memory 56 to the random access memory 55 so as to be executed by the microcontroller 54. The random access memory 55 likewise includes registers for storing the variables and parameters required for this execution.

All the steps of the present method (method for setting frequency channels in a multi-hop wireless mesh network) can be implemented equally well:

● by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or

● by a dedicated machine or component, such as an FPGA (Field Programmable Gate Array), an ASIC (Application-Specific Integrated Circuit) or any dedicated hardware component.

Characteristics of the node

In a particular embodiment, the node 50 has the following characteristics:

a) Operating frequency range: 2405 - 2475 MHz;
b) Number of hopping channels: L=17 (F0 to F16) (more generally, L is for example the smallest prime number allowed by the radio regulation (standard) to implement);
c) Channel spacing: 1 MHz (this allows to decrease interference between two channels since the signal bandwidth is lower than 500kHz.);
d) Internal antenna: gain 5dBi max;
e) Maximum output power: 26dBm eirp (compliant with FCC part 15). The user has to set the maximum output power to 20dBm eirp to insure ETSI EN 300 328 compliance;
f) Over the air data rates: 1.2kbps, 100kbps, 500kbps;
g) Modulation format: FSK for 1.2kbps, MSK for 100kbps and 500kbps.

Frequency channels hopping sequence and hop set

The RF transceiver 51 hops on 1MHz spaced channels with a hop period $T_{hop}$ depending on the data rate (see Table 1).

Table 1

| Data rate | 1.2kbps | 100kbps | 500kbps |
|---|---|---|---|
| Hop period | Thop_1.2kbps=130ms | Thop_100kbps=3ms | Thop_500kbps=1ms |

The carrier frequency (also referred to as the reference frequency) F of the transmit frequency channel is derived from:

● a base frequency F0;
● a channelization: ∆F=1MHz;
● a pseudorandom sequence of integers, comprising L=17 elements.

The sequence of integers is synchronized on an internal clock (CLK) which increments by one every $T_{hop}$. The internal clock can be synchronized by an external signal (GPS, etc.).

The carrier frequency F is computed as follows:

$$F(CLK) = F0 + \Delta F * Sequence(CLK \text{ modulo } L) \qquad (1)$$

with Sequence(x) a function giving an integer having rank x in the sequence of integers (which itself defines the frequency channels hopping sequence).

Different hop sets can be configured by modifying the base frequency F0. Examples of sequences of integers are given in Table 2.

Table 2

| Sequence S1 | 14 | 0 | 1 | 10 | 2 | 16 | 3 | 15 | 8 | 13 | 6 | 9 | 11 | 5 | 12 | 4 | 7 |
| Sequence S2 | 3 | 11 | 6 | 5 | 4 | 14 | 9 | 1 | 2 | 12 | 15 | 7 | 8 | 16 | 10 | 0 | 13 |
| Sequence S3 | 15 | 13 | 5 | 16 | 11 | 4 | 7 | 8 | 6 | 10 | 9 | 0 | 14 | 2 | 1 | 12 | 3 |

By default, the sequence number is set to Sequence S1. The sequence number can also be configured by the user.

For example, with: F0=2430MHz, ∆F=1MHz, L=17 and Sequence S1, we have:

| CLK | 0 | 1 | 2 | 3 | ... | 15 | 16 | 17 | 18 | 19 | ... |
|---|---|---|---|---|---|---|---|---|---|---|---|
| sequence (CLK modulo L) | 14 | 0 | 1 | 10 | ... | 4 | 7 | 14 | 0 | 1 | ... |
| F(CLK) | 2444 | 2430 | 2431 | 2440 | ... | 2434 | 2437 | 2444 | 2430 | 2431 | ... |

The values F(0) to F(16) form the frequency channels hopping sequence S shown in figures 1, 2, 3 and 4A (not to be confused with the aforesaid "sequences of integers").

Random delay

As already mentioned above, in a particular embodiment, a random delay $T_{rand}$ is inserted before each data packet transmission (not before the acknowledgement packets if any).

This random delay $T_{rand}$ is defined as follows:

$$T_{rand} = Random() \times T_{hop},$$

where:

● Random() is a pseudo-random integer drawn from an uniform distribution over the interval [0, CW]; and
● CW is a Contention Window, between $CW_{min}<=CW<=CW_{max}$. The values $CW_{min}$ and $CW_{max}$ are system specific.

For example, with CW=7 at 1.2kbps, $T_{rand}$ is comprised between 0 and 910ms (7 × Thop_1.2kbps).

The Contention Window (CW) is incremented following a binary exponential way when the transmitter node can not execute normally the transmitting step (because the transmitter node finds the medium busy after a carrier-sense mechanism or when the transmission fails for any reason, as in IEEE 802.11 standard).

Transmit frequency channel and maximal packet duration

Data packets are transmitted over several hop periods and they overlap at least two hop periods.

The transmit frequency channel of the data packet is fixed for the entire data packet duration (see Figures 2, 3 and 4B).

The transmit frequency channel of the data packet is derived from the internal clock value (CLK) at the start of the data packet, according to above equation (1).

Table 3 gives the maximal duration of the data packets according to the data rate.

Table 3

| Data rate | 1.2kbps | 100kbps | 500kbps |
|---|---|---|---|
| Minimal hop overlap | 2 | 2 | 2 |
| Maximal hop overlap | 3 | 5 | 5 |

(continued)

| Data rate | 1.2kbps | 100kbps | 500kbps |
|---|---|---|---|
| Maximal data packet duration (ms) | 3×Thop_1.2kbps = 390ms | 5×Thop_100kbps = 15ms | 5×Thop_500kbps = 5ms |

<u>Figure 6</u> is a flowchart detailing the steps carried out by a node in the transmit mode, according to a particular embodiment of the invention.

In a step 61, the node selects a transmit frequency channel as a function of the frequency channels hopping sequence S. In other words, the node selects a transmit time to which is associated a transmit frequency channel of the frequency channels hopping sequence S. In a particular embodiment already discussed above, the selecting step 61 comprises: obtaining a current value of the clock CLK when the selecting step 61 starts; and computing a reference frequency F(CLK) of the transmit frequency channel according to above equation (1).

In a step 62, the node inserts a random delay $T_{rand}$ before carrying out a transmitting step 63.

In the transmitting step 63, the node transmits a data packet using, for the entire duration of this data packet, the selected transmit frequency channel.

<u>Figure 7</u> is a flowchart detailing the steps carried out by a node in the receive mode, according to a particular embodiment of the invention.

In a step 71, the node detects a data packet on a given receive frequency channel of the frequency channels hopping sequence S.

In a step 72, the node checks if it is the destination of the detected data packet.

If the node is the destination of the detected data packet, it goes to step 73, in which the node stays on the given receive frequency channel till the end of the detected data packet.

If the node is not the destination of the detected data packet, it goes to step 74, in which the node hops on the next frequency channel of the frequency channels hopping sequence S, at the end of the current hop period $T_{hop}$.

**Claims**

1. Method for setting frequency channels in a multi-hop wireless mesh network comprising a plurality of nodes, **characterized in that** each of said nodes hops on frequency channels, with a hop period, according to a frequency channels hopping sequence, **in that** all data packets transmitted by said nodes have a duration strictly longer than said hop period, and **in that**, when a given node of said plurality of nodes is in a first transmit mode in order to transmit a data packet, it carries out steps of:

   - selecting (61) a transmit frequency channel as a function of said frequency channels hopping sequence;
   - transmitting (63) said data packet using, for the entire duration of said data packet, the selected transmit frequency channel.

2. Method according to claim 1, **characterized in that**, when a given node of said plurality of nodes is in a receive mode it carries out steps of:

   - detecting (71) a data packet on a given receive frequency channel of said frequency channels hopping sequence;
   - staying (73) on the given receive frequency channel till the end of said detected data packet, if said given node is the destination of said detected data packet;
   - hoping (74) on the next frequency channel of said frequency channels hopping sequence, at the end of a current hop period, if said given node is not the destination of said detected data packet.

3. Method according to any one of the claims 1 to 2, **characterized in that**, when a given node of said plurality of nodes is in a second transmit mode in order to transmit an acknowledgement packet of a data packet previously received by said given node on a given receive frequency channel, it carries out a step of:

   - transmitting said acknowledgement packet using as transmit frequency channel said given receive frequency channel.

4. Method according to any one of the claims 1 to 3, **characterized in that**, when a given node is in the first transmit mode, it carries out a supplemental step of:

- inserting (62) a random delay before carrying out the transmitting step.

5. Method according to claim 4, **characterized in that** said supplemental step of inserting a random delay is carried out before a second attempt to execute the transmitting step, if a first attempt to execute the transmitting step is not successful due to a transmission failure or a collision detection.

6. Method according to any one of the claims 4 and 5, **characterized in that** said random delay is defined by: $T_{rand}$ = Random() x $T_{hop}$, where:

- $T_{rand}$ is the random delay,
- $T_{hop}$ is the hop period, and
- Random() is a pseudo-random integer.

7. Method according to claim 6, **characterized in that** said pseudo-random integer Random() is drawn from an uniform distribution over an interval [O, CW], with CW a contention window having an integer value.

8. Method according to claim 7, **characterized in that** the contention window CW is incremented following a binary exponential way, when the transmitting step can not be executed normally.

9. Method according to any one of the claims 1 to 8, **characterized in that**, when a given node is in the first transmit mode, said selecting step comprises:

- obtaining a current value of a clock CLK when the selecting step starts, said clock CLK incrementing by one every hop period;
- computing a reference frequency F(CLK) of the transmit frequency channel as follows: $F(CLK) = F0 + \Delta F * Sequence(CLK \bmod L)$, where:

    * F0 is a base frequency,
    * $\Delta F$ is a channel spacing,
    * L is the number of frequency channels in the frequency channels hopping sequence,
    * Sequence(x) is a function giving an integer having rank x in a sequence of integers defining said frequency channels hopping sequence.

10. Method according to any one of the claims 1 to 9, **characterized in that** L is a prime number.

11. Method according to any one of the claims 1 to 10, **characterized in that** in transmitting step, the data packet is transmitted with a signal having a bandwidth lower than 500 kHz.

12. Method according to any one of the claims 1 to 11, **characterized in that** each of said nodes comprises or is connected to at least one seismic sensor belonging to the group comprising:

- analog or digital seismic sensors having a single vertical component; and
- analog or digital seismic sensors having three orthogonal components.

13. Method according to claim 12, **characterized in that** said nodes transmit data packets comprising quality control data.

14. Computer program product **characterized in that** it comprises program code instructions for implementing the method according to at least one of the claims 1 to 13, when said program is executed on a computer or a processor.

15. A non-transitory computer-readable carrier medium storing a program which, when executed by a computer or a processor, causes the computer or the processor to carry out the method of transmitting according to at least one of the claims 1 to 13.

16. Node belonging to a plurality of nodes comprised in a multi-hop wireless mesh network, **characterized in that** said node comprises:

- means for hoping on frequency channels, with a hop period, according to a frequency channels hopping sequence,
- means for transmitting data packets having a duration strictly longer than said hop period,

and the following means, activated when said node is in a first transmit mode in order to transmit a data packet:

- means for selecting a transmit frequency channel as a function of said frequency channels hopping sequence;
- means for transmitting said data packet using, for the entire duration of said data packet, the selected transmit frequency channel.

17. Node according to claim 16, **characterized in that** it comprises the following means, activated when said node is in a receive mode:

- means for detecting a data packet on a given receive frequency channel of said frequency channels hopping sequence;
- means for staying on the given receive frequency channel till the end of said detected data packet, if said node is the destination of said detected data packet;
- means for hoping on the next frequency channel of said frequency channels hopping sequence, at the end of a current hop period, if said node is not the destination of said detected data packet.

S

| Thop | | | | | | | | | | | | | | | | |
|------|---|---|---|---|---|---|---|---|---|---|---|---|---|---|---|---|

node A

| F0 | F1 | F2 | F3 | F4 | F5 | F6 | F7 | F8 | F9 | F10 | F11 | F12 | F13 | ... | F16 |

node B

| F0 | F1 | F2 | F3 | F4 | F5 | F6 | F7 | F8 | F9 | F10 | F11 | F12 | F13 | ... | F16 |

**Fig. 1**

21      22      23      24

node X

| Trand | F2 | Trand | F8 | Trand | F14 | Trand | F3 |

S

| F0 | F1 | F2 | F3 | F4 | F5 | F6 | F7 | F8 | F9 | F10 | F11 | F12 | F13 | F14 | F15 | F16 | F0 | F1 | F2 | F3 | F4 | F5 | F6 | F7 |

**Fig. 2**

31a      31b      32a      32b

node A

| TX on F1 | RX on F1 | | TX on F9 | RX on F9 |

DATA          ACK          DATA          ACK

node B

| RX on F1 | TX on F1 | | RX on F9 | TX on F9 |

S

| F0 | F1 | F2 | F3 | F4 | F5 | F6 | F7 | F8 | F9 | F10 | F11 | F12 | F13 | ... |

**Fig. 3**

Fig. 4A

Fig. 4B

Fig. 5

| selecting a transmit frequency channel | — 61 |

↓

| inserting a random delay Trand | — 62 |

↓

| transmitting a data packet | — 63 |

<u>Fig. 6</u>

| detecting a data packet | — 71 |

↓

(yes) ← node = destination of the data packet ? → (no)  — 72

| staying on the receive frequency channel till the end of the data packet | hoping on the next frequency channel |

73          74

<u>Fig. 7</u>

# EUROPEAN SEARCH REPORT

Europäisches
Patentamt

European
Patent Office

Office européen
des brevets

Application Number

EP 12 30 6475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/37757 A2 (UNIV CALIFORNIA [US]) 10 May 2002 (2002-05-10) * the whole document * ----- | 1-3, 11-17 | INV. H04B1/7143 |
| A | QI LING ET AL: "Message-driven frequency hopping: Design and analysis", IEEE TRANSACTIONS ON WIRELESS COMMUNICATIONS, IEEE SERVICE CENTER, PISCATAWAY, NJ, US, vol. 6, no. 4, 1 April 2009 (2009-04-01), pages 1773-1782, XP011256870, ISSN: 1536-1276 * paragraph [I.Introduction] * ----- | 1-3, 11-17 | |
| A | BOWMAN R D ET AL: "A multicasting protocol using transmitter-directed frequency-hop signaling for multiple-hop wireless networks", MILCOM 2000. 21ST CENTURY MILITARY COMMUNICATIONS CONFERENCE PROCEEDIN GS 22-25 OCTOBER 2000, PISCATAWAY, NJ, USA,IEEE, vol. 1, 22 October 2000 (2000-10-22), pages 539-543, XP010532649, DOI: 10.1109/MILCOM.2000.905015 ISBN: 978-0-7803-6521-6 * the whole document * ----- | 1-3, 11-17 | |

TECHNICAL FIELDS
SEARCHED (IPC)

H04B

The present search report has been drawn up for all claims

| Place of search | Date of completion of the search | Examiner |
|---|---|---|
| Munich | 13 March 2013 | Bauer, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 12 30 6475

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 11-17

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 12 30 6475

The Search Division considers that the present European patent application does not comply with the
requirements of unity of invention and relates to several inventions or groups of inventions, namely:

1. claims: 1-3, 11-17

   Claims 1 and 14-16 refer to method, program and apparatus
   for setting frequency channels in a multi-hop wireless mesh
   network comprising a plurality of nodes, characterized in
   that
   each of said nodes hops on frequency channels, with a hop
   period, according to a frequency channels hopping sequence,
   in that
   - all data packets transmitted by said nodes have a duration
   strictly longer than said hop period, and in that,
   - when a given node of said plurality of nodes is in a first
   transmit mode in order to transmit a data packet, it carries
   out steps of:
   - selecting a transmit frequency channel as a function of
   said frequency channels hopping sequence ;
   - transmitting said data packet using, for the entire
   duration of said data packet, the selected transmit
   frequency channel.
   Claims 2-3, 11-13 and 17 further refer to transmitting an
   acknowledgement packet on the same frequency as the receive
   frequency.
   ---

2. claims: 4-8

   Claims 4-8 further refer to inserting a random delay before
   carrying out the transmitting step.
   ---

3. claims: 9, 10

   Claims 9-10 further refer to computing of the reference
   frequency.
   ---

**ANNEX TO THE EUROPEAN SEARCH REPORT
ON EUROPEAN PATENT APPLICATION NO.**

EP 12 30 6475

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2013

| Patent document cited in search report | Publication date | Patent family member(s) | | Publication date |
|---|---|---|---|---|
| WO 0237757 A2 | 10-05-2002 | AU | 3087002 A | 15-05-2002 |
| | | US | 2002141479 A1 | 03-10-2002 |
| | | WO | 0237757 A2 | 10-05-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7773457 B, Crice

**Non-patent literature cited in the description**

• **SHIH-LIN WU ; CHIH-YU LIN ; YU-CHEE TSENG ; JANG-PING SHEU.** *A New Multi-Channel MAC protocol with O n-Demand Channel Assignment for Multi-Hop Mobile Ad Hoc Networks*